# EUROPEAN PATENT SPECIFICATION

(11) **EP 3 148 319 B1**
(45) Date of publication and mention of the grant of the patent: **05.01.2022**
(21) Application number: 15725621.5
(22) Date of filing: 28.05.2015
(51) Int. Cl.: A01G 24/18, A01G 24/44

(54) **GROWTH SUBSTRATE PRODUCT**
WACHSTUMSSUBSTRATPRODUKT
PRODUIT DE SUBSTRAT DE CROISSANCE

(30) Priority: 29.05.2014 EP 14170496
(43) Date of publication of application: 05.04.2017
(73) Proprietor: Rockwool International A/S, 2640 Hedehusene (DK)
(72) Inventor: JANSSEN, Frank, NL-5988 ES Helden (NL)
(74) Representative: Gill Jennings & Every LLP
(86) International application number: PCT/EP2015/061898
(87) International publication number: WO 2015/181323

(56) References cited:
- EP-A1- 0 416 838
- EP-A1- 1 097 630
- WO-A1-2013/040403

## Description

The invention relates to a coherent growth substrate product, use of a coherent growth substrate product as a growth substrate product for growing plants, or for propagating seeds, a method of growing plants in a coherent growth substrate, a method of propagating seeds in a coherent growth substrate product, and a process for making a coherent growth substrate product.

It has been known for many years to grow plants in coherent growth substrates formed from man-made vitreous fibres (MMVF), as described for example in document EP 0 416 838 A1. MMVF products for this purpose, which are provided as a coherent plug, block or slab, generally include a binder, usually an organic binder, in order to provide structural integrity to the product. This allows the growth substrate product to retain its structure during water irrigation. However, MMVF products which are to be used as growth substrates must have a capacity to take up and hold water, which is routinely supplied by an irrigation system to the growth substrate product, and must also have re-wetting properties. Accordingly, it has been well known for some years to include a wetting agent in MMVF products which are to be used as growth substrates.

EP1278410 discloses the use of a non-ionic fatty acid polyglycol ester surfactant as a wetting agent, such as Rewopal E070, in a growth substrate product. Such wetting agents have been used successfully in commercially available growth substrate products; however the uniformity in water content of such growth substrates could be improved, both within a single substrate and across multiple substrates. Furthermore, over time such wetting agents are washed out of a growth substrate product, an effect which is undesirable for maintaining sufficient wetting of the growth substrate product. This means that over time, the growth substrate product is able to hold less water. Furthermore it is undesirable for the wetting agent to be present in the runoff water as this means that the water then needs to be processed before reuse and/or disposal. Such a wetting agent has a high molecular weight and therefore can be more difficult to incorporate into the substrate and easier to flush out.

WO2008/009467 discloses the use of an ionic surfactant, particularly an anionic surfactant such as linear alkyl benzene sulphonate anionic surfactant (LAS), as a wetting agent in a growth substrate product. Wetting agents such as LAS have been successfully used in commercial practice in growth substrate products, in order to improve the uniformity of such growth substrates. However it has been found that an LAS wetting agent leads to slower initial wetting of a growth substrate product than when non-ionic fatty acid polyglycol ester surfactants are used as the wetting agent.

There is a need, therefore, for an improved wetting agent for using in growth substrate products for growing plants. In particular, there is a need for a wetting agent of the invention that is not easily washed out of growth substrate products. There is a need for a growth substrate product with improved initial wetting. There is a need for growth substrate products which display more uniformity of water content, both within a single substrate and across multiple substrates. There is a need for a wetting agent that can be applied in the manufacture of a growth substrate product without the need for an additional processing agent. There is a need to increase the water content in regions towards the top of the growth substrate. The present invention solves these problems.

### Summary of Invention

The invention provides in a first aspect a coherent growth substrate product formed of man-made vitreous fibres bonded with a cured binder composition and a wetting agent, characterised in that the wetting agent is an alkyl ether sulphate.

In a second aspect there is provided use of a growth substrate product according to the first aspect of the invention as a growth substrate for growing plants, or for propagating seeds.

In a third aspect, the invention provides a method of growing plants in a coherent growth substrate product, the method comprising:
providing at least one growth substrate product formed of man-made vitreous fibres bonded with a cured binder composition and a wetting agent;
positioning one or more plants for growth in the growth substrate product; and
irrigating the growth substrate product;
characterised in that the wetting agent is an alkyl ether sulphate.

In a fourth aspect, the invention provides a method of propagating seeds in a coherent growth substrate product, the method comprising:
providing at least one growth substrate product formed of man-made vitreous fibres bonded with a cured binder composition and a wetting agent,
positioning one or more seeds in the growth substrate product,
irrigating the growth substrate product; and
allowing germination and growth of the seed to form a seedling;
characterised in that the wetting agent is an alkyl ether sulphate.

### Brief Description of Figures

Figure 1 shows the standard deviation of the water content of blocks after the first total flooding of the block.
Figure 2 shows the standard deviation of the water content of blocks after the third total flooding of the block.
Figure 3 shows the standard deviation of the water content of blocks in a greenhouse.
Figure 4 shows the standard deviation of the water content of slabs.
Figure 5 shows the sinking time of growth substrate products.

### Detailed description of Invention

### Growth Substrate Product

The present invention relates to a coherent growth substrate product formed of man-made vitreous fibres bonded with a cured binder composition and a wetting agent, characterised in that the wetting agent is an alkyl ether sulphate surfactant.

The growth substrate product of the invention is formed of man-made vitreous fibres (MMVF). The MMVF can be of the conventional type used for formation of known MMVF growth substrates. It can be glass wool or slag wool but is usually stone wool. Stone wool generally has a content of iron oxide at least 3% and content of alkaline earth metals (calcium oxide and magnesium oxide) from 10 to 40%, along with the other usual oxide constituents of mineral wool. These are silica; alumina; alkali metals (sodium oxide and potassium oxide) which are usually present in low amounts; and can also include titania and other minor oxides. In general it can be any of the types of man-made vitreous fibre which are conventionally known for production of growth substrates.

Fibre diameter is often in the range of 2 to 10 microns, in particular 3 to 8 microns, as conventional.

Preferably the growth substrate product comprises at least 90 wt% man-made vitreous fibres by weight of the total solid content of the growth substrate. An advantage of having such an amount of fibres present in the growth substrate product is that there are sufficient pores formed between the fibres to allow the growth substrate product to hold water and nutrients for the plant, whilst maintaining the ability for roots of the plants to permeate the growth substrate product. The remaining solid content is made up primarily of binder and wetting agent.

The MMVF may be made by any of the methods known to those skilled in the art for production of MMVF growth substrate products. In general, a mineral charge is provided, which is melted in a furnace to form a mineral melt. The melt is then formed into fibres by means of rotational fiberisation such as internal centrifugal fiberisation e.g. using a spinning cup or external centrifuging e.g. using a cascade spinner, to form a cloud of fibres. These fibres are then collected and consolidated. Binder and optionally wetting agent are usually added at the fiberisation stage by spraying into the cloud of forming fibres. These methods are well known in the art.

Preferably the growth substrate product has an average density of from 30 to 150 kg/m³, such as 30 to 100 kg/m³, more preferably 40 to 90 kg/m³.

The growth substrate product preferably has a volume in the range 3 to 86400 cm³, such as 5 to 30,000 cm³, preferably 8 to 20,000 cm³. The growth substrate product may be in the form of a product conventionally known as a plug, or in the form of a product conventionally known as a block, or in the form of a product conventionally known as a slab.

The growth substrate product may have dimensions conventional for the product type commonly known as a plug. Thus it may have height from 20 to 35 mm, often 25 to 28 mm, and length and width in the range 15 to 25 mm, often around 20 mm. In this case the substrate is often substantially cylindrical with the end surfaces of the cylinder forming the top and bottom surfaces of the growth substrate.

The volume of the growth substrate product in the form of a plug is preferably not more than 150 cm³. In general the volume of the growth substrate product in the form of a plug is in the range 3 to 150 cm³ and preferably not more than 100 cm³, more preferably not more than 80 cm³, in particular not more than 75 cm³, most preferably not more than 70 cm³. The minimum distance between the top and bottom surfaces of a plug is preferably less than 60 mm, more preferably less than 50 mm and in particular less than 40 mm or less.

Another embodiment of a plug has height from 30 to 50 mm, often around 40 mm and length and width in the range 20 to 40 mm, often around 30 mm. The growth substrate in this case is often of cuboid form. In this first case the volume of the growth substrate is often not more than 50 cm³, preferably not more than 40 cm³.

Alternatively the growth substrate may be of the type of plug described as the first coherent MMVF growth substrate in our publication WO2010/003677. In this case the volume of the growth substrate product is most preferably in the range to 10 to 40 cm³.

The growth substrate product may have dimensions conventional for the product type commonly known as a block. Thus it may have height from 5 to 20 cm, often 6 to 15 cm, and length and width in the range 4 to 30 cm, often 10 to 20 cm. In this case the substrate is often substantially cuboidal. The volume of the growth substrate product in the form of a block is preferably in the range 80 to 8000 cm³.

The growth substrate product may have dimensions conventional for the product type commonly known as a slab. Thus it may have height from 5 to 15 cm, often 7.5 to 12.5 cm, a width in the range of 5 to 30 cm, often 12 to 24 cm, and a length in the range 30 to 240 cm, often 40 to 200 cm. In this case the substrate is often substantially cuboidal. The volume of the growth substrate product in the form of a slab is preferably in the range 750 to 86,400 cm³.

The height is the vertical height of the growth substrate product when positioned as intended to be used and is thus the distance between the top surface and the bottom surface. The top surface is the surface that faces upwardly when the product is positioned as intended to be used and the bottom surface is the surface that faces downwardly (and on which the product rests) when the product is positioned as intended to be used.

In general, the growth substrate product may be of any appropriate shape including cylindrical, cuboidal and cubic. Usually the top and bottom surfaces are substantially planar.

The growth substrate product is in the form of a coherent mass. That is, the growth substrate is generally a coherent matrix of man-made vitreous fibres, which has been produced as such, but can also be formed by granulating a slab of mineral wool and consolidating the granulated material.

The growth substrate product comprises a cured binder composition, often an organic binder, which is generally heat-curable. The growth substrate product is a coherent matrix of MMVF connected by cured binder. The binder can be an organic hydrophobic binder, and in particular it can be a conventional heat-curable (thermosetting), hydrophobic binder of the type which has been used for many years in MMVF growth substrates (and other MMVF-based products). This has the advantage of convenience and economy. Thus, the binder may be a phenol formaldehyde resin or urea formaldehyde resin, in particular phenol urea formaldehyde (PUF) resin.

The binder composition may be a sugar-based binder comprising a mixture of phenol urea formaldehyde (PUF) resin and dextrose. The dextrose can be present in an amount of up to 60 wt% dextrose.

In a further embodiment, the sugar-based binder may be a formaldehyde-free binder. Prior to curing, such binders may comprise;
a) a sugar component,
b) a reaction product of a polycarboxylic acid component and an alkanolamine component,
wherein the binder prior to curing contains at least 42% by weight of the sugar component based on the total weight (dry matter) of the binder components, preferably wherein the binder prior to curing contains 46 to 64% by weight of the sugar component based on the total weight (dry matter) of the binder components.

Formaldehyde-free binder compositions are particularly beneficial to plant growth, and especially plant propagation, as plants are sensitive to high concentrations of formaldehyde, which can have a detrimental effect on plant growth.

The binder can be itself hydrophilic. A hydrophilic binder does not require the use of as much wetting agent as a hydrophobic binder. A wetting agent in the invention can nevertheless be used to increase the hydrophilicity of a hydrophilic binder in a similar manner to its action in combination with a hydrophobic binder. This means that the MMVF substrate will absorb a higher volume of water than if the wetting agent is not present. Any hydrophilic binder can be used, for example the binder disclosed in WO2012/028650.

Preferably the amount of binder added before curing the growth substrate product is 1 to 10 wt%, preferably 2 to 6 wt%, based on the total weight of the substituents of the growth substrate product prior to curing.

A wetting agent will increase the amount of water that the growth substrate product can absorb. The use of a wetting agent in combination with a hydrophobic binder results in a hydrophilic growth substrate product.

The wetting agent is an alkyl ether sulphate surfactant. The wetting agent may be an alkali metal alkyl ether sulphate or an ammonium alkyl ether sulphate. Preferably the wetting agent is a sodium alkyl ether sulphate.

Preferably the alkyl in the alkyl ether sulphate has a chain length of 8 to 18 carbons, preferably 12 to 15 carbons, preferably 12 to 14 carbons. Such alkyl ether sulphates have a preferred size which means that they are less likely to be washed out of the growth substrate product.

Preferably the wetting agent has an average degree of ethoxylation in the range 1 to 5, more preferably in the range 2 to 4. Use of such alkyl ether sulphates in growth substrate products show enhanced wetting properties. This is believed to be due to the larger surface tension lowering effect of such alkyl ether sulphates, which results in lower contact angles and therefore efficient and uniform spreading of water over the fibre surface (relative to more highly ethoxylated alkyl ether sulphates).

Preferably the wetting agent has the formula

RO(CH₂CH₂O)ₙSO₃Na

wherein R is a C₈₋₁₈ linear or branched, cyclic or non-cyclic alkyl group, preferably wherein R is a C₁₂₋₁₅ linear or branched, cyclic or non-cyclic alkyl group, more preferably wherein R is a C₁₂₋₁₄ linear or branched, cyclic or non-cyclic alkyl group; and wherein n is in the range 1 to 10, preferably wherein n is in the range 2 to 3. Such wetting agents display a large surface tension lowering effect, which results in low contact angles and therefore efficient and uniform spreading of water over the fibre surface.

A particularly preferred wetting agent is sodium lauryl ether sulphate, preferably wherein the wetting agent has an average degree of ethoxylation in the range 2 to 3. Such average degrees of ethoxylation are preferred as this equates to a low surface tension of sodium lauryl ether sulphate, which results in large surface tension lowering effect and therefore efficient and uniform spreading of water over the fibre surface.

Levels of wetting agent are preferably in the range 0.05 to 3 wt%, based on the weight of the growth substrate product, in particular in the range 0.05 to 0.8 wt%, based on the weight of the growth substrate product.

Particular advantages of the wetting agents of the invention are that the wetting agent of the invention is not easily washed out of growth substrate products. The wetting agent of the invention improves the initial wetting of the growth substrate product compared to known wetting agents, such as LAS, that is wetting is quicker for substrates of the present invention compared with growth substrates containing LAS as a wetting agent. Growth substrate products using the wetting agent of the invention are stable and maintain their initial wetting and resaturation properties in use over time. The wetting agents of the invention are low molecular weight wetting agents. There is improved uniformity of a growth substrate using the wetting agent of the invention compared to known commercially-used wetting agents such as Rewopal or LAS. This is shown, for example in the uniformity in water content of growth substrates in a greenhouse. A lower standard deviation of water content is shown for growth substrates of the present invention compared with growth substrates containing LAS or Rewopal as a wetting agent. Wetting agents of the invention are low toxicity wetting agents that do not adversely affect plant growth, compared to conventional wetting agents such as LAS. Furthermore, the wetting agents of the present invention can be applied in the manufacture of a growth substrate product without the need for an additional processing agent, unlike known wetting agents such as LAS. LAS requires an additional processing agent, a polyol, preferably monoethylene glycol to be used in the method of making a growth substrate. Such a processing agent is not required to make growth substrates according to the present invention. The wetting agents of the invention are in liquid form which facilitates their application in the manufacture of growth substrate products. Growth substrate products using the wetting agents of the invention increase the water content in the top region of the growth substrate compared to conventional wetting agents such as Rewopal and LAS. Wetting agents of the invention are therefore superior to conventional wetting agents such as Rewopal and LAS.

The growth substrate product may contain other types of conventional additives in addition to binder and wetting agents, for instance salts such as ammonium sulphate and adhesion promoters such as silanes.

### Use of the growth substrate product

The present invention provides the use of a growth substrate product as a growth substrate for growing plants, or for propagating seeds. It is intended that the growth substrate product of the invention is used for growing plants and for propagating seeds.

### Method of growing plants

The present invention provides a method of growing plants in a coherent growth substrate product, the method comprising:
providing at least one growth substrate product formed of man-made vitreous fibres bonded with a cured binder composition and a wetting agent;
positioning one or more plants for growth in the growth substrate product; and
irrigating the growth substrate product;
characterised in that the wetting agent is an alkyl ether sulphate.

Irrigation may occur by direct irrigation of the growth substrate product, that is, water is supplied directly to the growth substrate product, such as by a wetting line, tidal flooding, a dripper, sprinkler or other irrigation system.

The growth substrate product used in the method of growing plants is preferably as described above.

### Method of propagating seeds

The present invention provides a method of propagating seeds in a coherent growth substrate product, the method comprising:
providing at least one growth substrate product formed of man-made vitreous fibres bonded with a cured binder composition and a wetting agent,
positioning one or more seeds in the growth substrate product,
irrigating the growth substrate product; and
allowing germination and growth of the seed to form a seedling;
characterised in that the wetting agent is an alkyl ether sulphate.

Irrigation may occur by direct irrigation of the growth substrate product, that is, water is supplied directly to the growth substrate product, such as by a wetting line, tidal flooding, a dripper, sprinkler or other irrigation system.

The growth substrate product used in the method of propagating seeds is preferably as described above.

### Process of making a coherent growth substrate

A process of making a coherent growth substrate product comprising the steps of:
i. providing man-made vitreous fibres;
ii. spraying the man-made vitreous fibres with a binder composition;
iii. spraying the man-made vitreous fibres with a wetting agent;
iv. collecting and consolidating the man-made vitreous fibres; and
v. curing the binder composition;
characterised in that the wetting agent is an alkyl ether sulphate.

Preferably, steps ii and iii occur substantially simultaneously. This means that the binder composition and the wetting agent may be sprayed from separate spraying devices. Alternatively, the wetting agent and the binder may be mixed and sprayed from separate spraying devices. An advantage of the binder and the wetting agent being sprayed substantially simultaneously is that the man-made vitreous fibres receive a consistent amount of both the binder and the wetting agent.

The invention will now be described in relation to the following nonlimiting examples.

### Example 1

The uniformity in water content between blocks was measured in a greenhouse. The uniformity in water content between substrate blocks containing binder wetting agent combinations as defined in Table 1 was compared. The growth substrate products were plugs made of a stone wool fibre product bonded with a cured binder and containing a wetting agent. The plugs were cylindrical with a height of 28mm and a diameter of 20mm and contained a tomato crop. The uniformity in water content between blocks (dimensions 100*100*65 mm) was measured after the first tidal flooding of the block, and the results are shown in Table 1.

**Table 1**

| Binder | Wetting agent | Standard Deviation in Water Content (%) |
|---|---|---|
| Binder A | Wetting Agent Ref | 3.65 |
| Binder A | Wetting Agent New | 2.06 |
| Binder B | Wetting Agent Ref | 3.45 |
| Binder B | Wetting Agent New | 1.46 |
| Binder C | Wetting Agent Ref | 2.88 |
| Binder C | Wetting Agent New | 0.64 |

| | | |
|---|---|---|
| Wetting agent ref = LAS wetting agent Wetting agent new = alkyl ether sulphate wetting agent (referred to as FES) Binder A = PUF Binder B = sugar based hydrophilic binder 1 Binder C = Sugar based hydrophilic binder 2 | | |

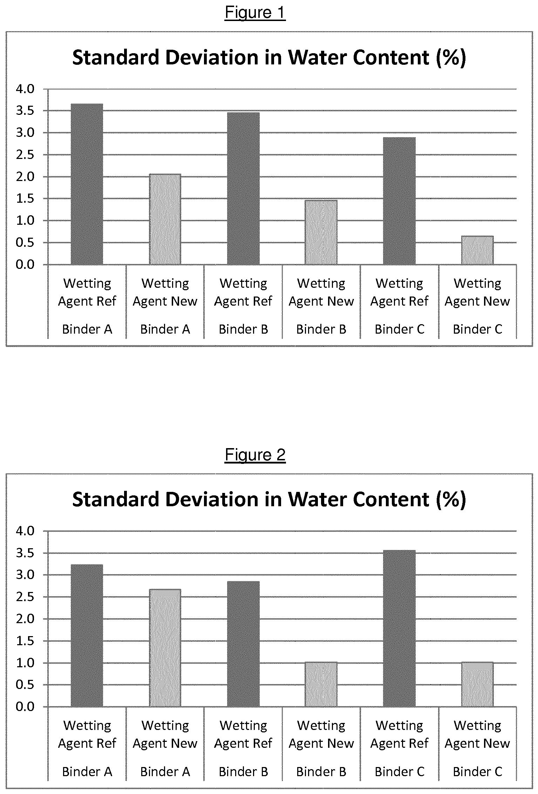

The standard deviation of the water content across the set of measured blocks is shown in Figure 1.

### Example 2

The uniformity in water content between blocks according to Example 1 was further investigated. Further measurements were made after the third tidal flooding of the blocks. The results for these measurements are shown below in Table 2 and Figure 2.

**Table 2**

| Binder | Wetting agent | Standard Deviation in Water Content (%) |
|---|---|---|
| Binder A | Wetting Agent Ref | 3.22 |
| Binder A | Wetting Agent New | 2.66 |
| Binder B | Wetting Agent Ref | 2.84 |
| Binder B | Wetting Agent New | 1.01 |
| Binder C | Wetting Agent Ref | 3.55 |
| Binder C | Wetting Agent New | 1.01 |

The standard deviation of the water content across the set of measured blocks is shown in Figure 2.

### Example 3

The uniformity in water content between blocks was measured in a greenhouse in both a method of propagation and a method of growing. The uniformity in water content between substrate blocks containing binder-wetting agent combinations as defined in Table 3 was compared. The growth substrate products were plugs and blocks, all made of a stone wool fibre product bonded with a cured binder and containing a wetting agent. The plugs were cylindrical with a height of 28mm and a diameter of 20mm and contained a sweet pepper crop, and were placed on top of blocks. Cucumber was also grown by being seeded directly into blocks.

**Table 3**

| Crop | | Date | Wetting Agent Ref | Wetting Agent New |
|---|---|---|---|---|
| Cucumber | Propagation site A | 04/04/2014 | 2.6 | 2.0 |
| Cucumber | Propagation site A | 15/04/2014 | 4.1 | 3.5 |
| Cucumber | Propagation site A | 24/04/2014 | 7.8 | 4.9 |
| Cucumber | Propagation site B | 23/04/2014 | 6.9 | 4.8 |
| Cucumber | Propagation site C | 23/04/2014 | 3.0 | 1.8 |
| Cucumber | Propagation site D | 15/01/2014 | 1.5 | 1.1 |
| Cucumber | Propagation site D | 14/03/2014 | 3.0 | 1.5 |
| Sweet Pepper | Growing site A | 15/01/2014 | 4.8 | 2.7 |
| Sweet Pepper | Growing site A | 14/03/2014 | 3.3 | 2.8 |
| Sweet Pepper | Growing site A | 23/04/2014 | 4.3 | 2.2 |

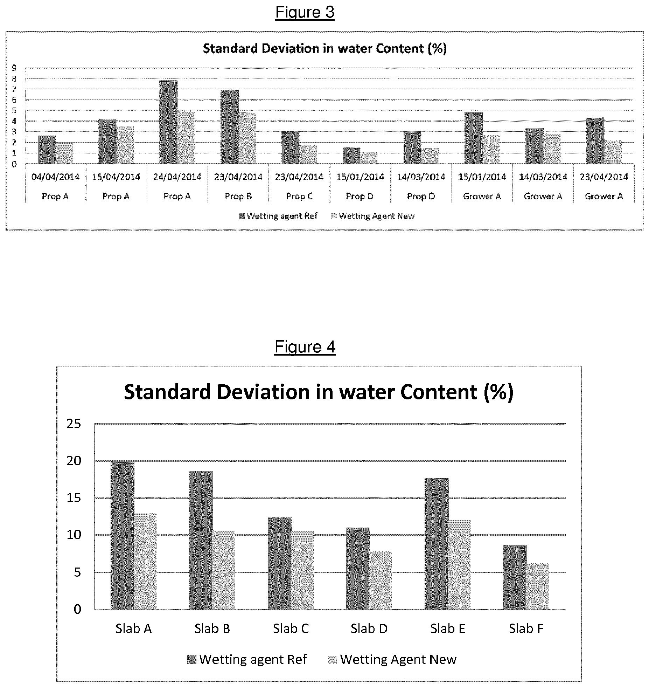

The standard deviation of the water content for the measured blocks is shown in Figure 3.

### Example 4

The uniformity in water content within slabs was measured in a laboratory. Measurements were obtained from the growth substrate at 9 positions over the length and at 4 different heights, in a total of 36 positions. The uniformity in water content within slabs containing binder wetting agent combinations as defined in Table 4 were compared.

**Table 4**

| | Fibre direction | Density | Dimensions (l*w*h in mm) | Wetting Agent Ref | Wetting Agent New |
|---|---|---|---|---|---|
| Slab A | Vertical | 46 | 1000*150*75 | 19.9 | 12.9 |
| Slab B | Horizontal | 75 | 1000*150*75 | 18.6 | 10.6 |
| Slab C | Vertical | 46 | 1000*150*75 | 12.3 | 10.5 |
| Slab D | Horizontal | 57 | 1000*150*75 | 10.9 | 7.8 |
| Slab E | Vertical | 46 | 1000*150*75 | 17.6 | 12 |
| Slab F | Horizontal | 57 | 1000*150*75 | 8.6 | 6.2 |

The standard deviation of the water content for the measured slabs is shown in Figure 4.

### Example 5

The sinking time of a growth substrate product is defined as a measure of how fast the product can take up water. The faster the water uptake, the lower the sinking time. The sinking time for seven growth substrate products (A to G) was measured with the reference wetting agent composition (LAS) and with the new wetting agent composition (FES).

**Table 5**

| Product | Production date | Product type | Wetting Agent Ref | Wetting Agent New |
|---|---|---|---|---|
| A | 14/05/2014 | Block A | 12 | 6 |
| B | 29/08/2013 | Block B | 15 | 6 |
| C | 29/08/2013 | Slab A | 33 | 11 |
| D | 14/01/2014 | Slab B | 17 | 6 |
| E | 14/01/2014 | Slab C | 20 | 7 |
| F | 14/01/2014 | Slab D | 49 | 11 |
| G | 14/01/2014 | Slab E | 44 | 9 |

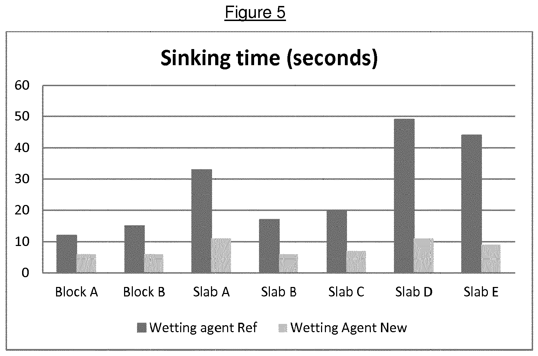

The measured sinking times are shown in Figure 5.

### Conclusion:

- The standard deviation results of uniformity in water content between blocks (Table 1), measured after the first tidal flooding, show a lower standard deviation for the FES wetting agent in comparison to the prior art LAS wetting agent. This shows that growth substrates of the present invention with an alkyl ether sulphate wetting agent have greater uniformity than growth substrates with a LAS wetting agent.
- Similarly, the standard deviation results of uniformity in water content between blocks (Table 2), measured after the third tidal flooding, show a lower standard deviation for the FES wetting agent in comparison to the prior art LAS wetting agent. This shows that growth substrates of the present invention with an alkyl ether sulphate wetting agent have greater uniformity than growth substrates with a LAS wetting agent.
- The standard deviation results of uniformity in water content between blocks (Table 3) show a lower standard deviation for the FES wetting agent compared to the LAS wetting agent. This is true for blocks measured in a greenhouse in both a method of propagation and a method for growing. This shows that growth substrates of the present invention with an alkyl ether sulphate wetting agent have greater uniformity than growth substrates with a LAS wetting agent.
- The standard deviation results of uniformity in water content within slabs (Table 4) show a lower standard deviation for the FES wetting agent compared to the LAS wetting agent. This is true for slabs with both horizontal and vertical fibre orientations. This shows that substrates of the present invention with an alkyl ether sulphate wetting agent have greater uniformity than substrates with a LAS wetting agent.
- Sinking times of FES based products, both for blocks and slabs, are much lower than for LAS based products i.e. FES based products have a much faster sinking time. This shows that substrates of the present invention with an alkyl ether sulphate wetting agent have faster initial wetting than substrates with a LAS wetting agent.

## Claims

1. A coherent growth substrate product formed of man-made vitreous fibres bonded with a cured binder composition and a wetting agent, **characterised in that** the wetting agent is an alkyl ether sulphate.

2. A growth substrate product according to claim 1, wherein the wetting agent is an alkali metal alkyl ether sulphate or an ammonium alkyl ether sulphate.

3. A growth substrate product according to any preceding claim, wherein the wetting agent is a sodium alkyl ether sulphate.

4. A growth substrate product according to any preceding claim, wherein the alkyl has a carbon chain length of 8 to 18 carbons, preferably 12 to 15 carbons, preferably 12 to 14 carbons.

5. A growth substrate product according to any preceding claim, wherein the wetting agent has an average degree of ethoxylation in the range 1 to 50, preferably in the range 2 to 4.

6. A growth substrate product according to any preceding claim, wherein the wetting agent has the formula
RO(CH₂CH₂O)ₙSO₃Na
wherein R is a C₈₋₁₈ linear or branched, cyclic or non-cyclic alkyl group, preferably wherein R is a C₁₂₋₁₅ linear or branched, cyclic or non-cyclic alkyl group, more preferably wherein R is a C₁₂₋₁₄ linear or branched, cyclic or non-cyclic alkyl group; and
wherein n is in the range 1 to 50, preferably wherein n is in the range 2 to 4.

7. A growth substrate product according to any preceding claim, wherein the wetting agent is sodium lauryl ether sulphate, preferably wherein the wetting agent has an average degree of ethoxylation in the range 2 to 3.

8. A growth substrate product according to any preceding claim, wherein the amount of wetting agent is in the range 0.05 to 3 wt% based on the weight of the growth substrate product, preferably in the range 0.05 to 0.8 wt% based on the weight of the growth substrate product.

9. A growth substrate product according to any preceding claim, wherein the growth substrate product comprises no wetting agent other than the alkyl ether sulphate.

10. A growth substrate product according to any preceding claim, wherein the growth substrate product has an average density of from 30 to 150 kg/m³, preferably 30 to 100 kg/m³, more preferably 40 to 90 kg/m³.

11. A growth substrate product according to any preceding claim, wherein the growth substrate product comprises at least 90 wt% man-made vitreous fibres.

12. A growth substrate product according to any preceding claim, wherein the binder composition prior to curing comprises:
a) a sugar component,
b) a reaction product of a polycarboxylic acid component and an alkanolamine component,
wherein the binder prior to curing contains at least 42% by weight of the sugar component based on the total weight (dry matter) of the binder components, preferably 46 to 64% by weight of the sugar component based on the total weight (dry matter) of the binder components.

13. A growth substrate product according to any preceding claim, wherein the binder composition prior to curing is a phenol urea formaldehyde binder.

14. A growth substrate product according to any of the preceding claims, wherein the amount of binder added before curing is 1-10 wt%, preferably 2-6 wt%.

15. Use of a growth substrate product according to any of claims 1 to 15 as a growth substrate for growing plants, or for propagating seeds.

16. A method of growing plants in a coherent growth substrate product, the method comprising:
providing at least one growth substrate product formed of man-made vitreous fibres bonded with a cured binder composition and a wetting agent;
positioning one or more plants for growth in the growth substrate product; and
irrigating the growth substrate product;
**characterised in that** the wetting agent is an alkyl ether sulphate.

17. A method of propagating seeds in a coherent growth substrate product, the method comprising :
providing at least one growth substrate product formed of man-made vitreous fibres bonded with a cured binder composition and a wetting agent,
positioning one or more seeds in the growth substrate product,
irrigating the growth substrate product; and
allowing germination and growth of the seed to form a seedling;
**characterised in that** the wetting agent is an alkyl ether sulphate.

18. A process of making a coherent growth substrate product comprising the steps of:
i. providing man-made vitreous fibres;
ii.spraying the man-made vitreous fibres with a binder composition;
iii.spraying the man-made vitreous fibres with a wetting agent;
iv.collecting and consolidating the man-made vitreous fibres; and
v.curing the binder composition;
optionally wherein steps ii and iii occur substantially simultaneously,
**characterised in that** the wetting agent is an alkyl ether sulphate.

19. A process according to claim 18, a method according to claim 16 or a method according to claim 17, wherein the coherent growth substrate product further comprises the features of any of claims 2 to 15.

## Patentansprüche

1. Kohärentes Wachstumssubstratprodukt, das aus künstlichen glasartigen Fasern ausgebildet ist, die mit einer ausgehärteten Bindemittelzusammensetzung und einem Benetzungsmittel verbunden sind, **dadurch gekennzeichnet, dass** das Benetzungsmittel ein Alkylethersulfat ist.

2. Wachstumssubstratprodukt nach Anspruch 1, wobei das Benetzungsmittel ein Alkalimetallalkylethersulfat oder ein Ammoniumalkylethersulfat ist.

3. Wachstumssubstratprodukt nach einem vorhergehenden Anspruch, wobei das Benetzungsmittel ein Natriumalkylethersulfat ist.

4. Wachstumssubstratprodukt nach einem vorhergehenden Anspruch, wobei das Alkyl eine Kohlenstoffkettenlänge von 8 bis 18 Kohlenstoffen, bevorzugt 12 bis 15 Kohlenstoffen, bevorzugt 12 bis 14 Kohlenstoffen, aufweist.

5. Wachstumssubstratprodukt nach einem vorhergehenden Anspruch, wobei das Benetzungsmittel einen durchschnittlichen Ethoxylierungsgrad in dem Bereich 1 bis 50, bevorzugt in dem Bereich 2 bis 4, aufweist.

6. Wachstumssubstratprodukt nach einem vorhergehenden Anspruch, wobei das Benetzungsmittel die Folgende Formel aufweist
RO(CH₂CH₂O)ₙSO₃Na
wobei R eine lineare oder verzweigte, cyclische oder nicht cyclische C₈₋₁₈-Alkylgruppe ist, bevorzugt wobei R eine lineare oder verzweigte, cyclische oder nicht cyclische C₁₂₋₁₅-Alkylgruppe ist, stärker bevorzugt wobei R eine lineare oder verzweigte, cyclische oder nicht-cyclische C₁₂₋₁₄-Alkylgruppe ist; und
wobei n in dem Bereich 1 bis 50 liegt, bevorzugt wobei n in dem Bereich 2 bis 4 liegt.

7. Wachstumssubstratprodukt nach einem vorhergehenden Anspruch, wobei das Benetzungsmittel Natriumlaurylethersulfat ist, bevorzugt wobei das Benetzungsmittel einen durchschnittlichen Ethoxylierungsgrad in dem Bereich 2 bis 3 aufweist.

8. Wachstumssubstratprodukt nach einem vorhergehenden Anspruch, wobei die Menge des Benetzungsmittels in dem Bereich 0,05 bis 3 Gew.-%, basierend auf dem Gewicht des Wachstumssubstratprodukts, bevorzugt in dem Bereich 0,05 bis 0,8 Gew.-%, basierend auf dem Gewicht des Wachstumssubstratprodukts, liegt.

9. Wachstumssubstratprodukt nach einem vorhergehenden Anspruch, wobei das Wachstumssubstratprodukt kein anderes Benetzungsmittel als das Alkylethersulfat umfasst.

10. Wachstumssubstratprodukt nach einem vorhergehenden Anspruch, wobei das Wachstumssubstratprodukt eine durchschnittliche Dichte von 30 bis 150 kg/m³, bevorzugt 30 bis 100 kg/m³, stärker bevorzugt 40 bis 90 kg/m³ aufweist.

11. Wachstumssubstratprodukt nach einem vorhergehenden Anspruch, wobei das Wachstumssubstratprodukt wenigstens 90 Gew.-% künstliche glasartige Fasern umfasst.

12. Wachstumssubstratprodukt nach einem vorhergehenden Anspruch, wobei die Bindemittelzusammensetzung vor dem Aushärten Folgendes umfasst:
a) eine Zuckerkomponente,
b) ein Reaktionsprodukt einer Polycarbonsäurekomponente und einer Alkanolaminkomponente,
wobei das Bindemittel vor dem Aushärten wenigstens 42 Gew.-% der Zuckerkomponente, basierend auf dem Gesamtgewicht (Trockensubstanz) der Bindemittelkomponenten, bevorzugt 46 bis 64 Gew.-% der Zuckerkomponente basierend auf dem Gesamtgewicht (Trockensubstanz) der Bindemittelkomponenten, enthält.

13. Wachstumssubstratprodukt nach einem vorhergehenden Anspruch, wobei die Bindemittelzusammensetzung vor dem Aushärten ein Phenolharnstoffformaldehydbindemittel ist.

14. Wachstumssubstratprodukt nach einem der vorhergehenden Ansprüche, wobei die Menge des Bindemittels, das vor dem Aushärten zugesetzt wird, 1-10 Gew.-%, bevorzugt 2-6 Gew.-% beträgt.

15. Verwendung eines Wachstumssubstratprodukts nach einem der Ansprüche 1 bis 15 als ein Wachstumssubstrat zum Heranziehen von Pflanzen oder zum Vermehren von Samen.

16. Verfahren zum Heranziehen von Pflanzen in einem kohärenten Wachstumssubstratprodukt, wobei das Verfahren Folgendes umfasst:
Bereitstellen von wenigstens einem Wachstumssubstratprodukt, das aus künstlichen glasartigen Fasern ausgebildet ist, die mit einer ausgehärteten Bindemittelzusammensetzung und einem Benetzungsmittel verbunden sind;
Positionieren einer oder mehrerer Pflanzen für das Heranziehen in dem Wachstumssubstratprodukt; und
Bewässern des Wachstumssubstratprodukts;
**dadurch gekennzeichnet, dass** das Benetzungsmittel ein Alkylethersulfat ist.

17. Verfahren zum Vermehren von Samen in einem kohärenten Wachstumssubstratprodukt, wobei das Verfahren Folgendes umfasst:
Bereitstellen von wenigstens einem Wachstumssubstratprodukt, das aus künstlichen glasartigen Fasern ausgebildet ist, die mit einer ausgehärteten Bindemittelzusammensetzung und einem Benetzungsmittel verbunden sind,
Positionieren eines oder mehrerer Samen in dem Wachstumssubstratprodukt;
Bewässern des Wachstumssubstratprodukts; und
Ermöglichen, dass eine Keimung und das Wachstum des Samens einen Keimling ausbildet;
**dadurch gekennzeichnet, dass** das Benetzungsmittel ein Alkylethersulfat ist.

18. Vorgang zum Herstellen eines kohärenten Wachstumssubstratprodukts, der die folgenden Schritte umfasst:
i. Bereitstellen künstlicher glasartiger Fasern;
ii. Besprühen der künstlichen glasartigen Fasern mit einer Bindemittelzusammensetzung;
iii. Besprühen der künstlichen glasartigen Fasern mit einem Benetzungsmittel;
iv. Sammeln und Verdichten der künstlichen glasartigen Fasern; und
v. Aushärten der Bindemittelzusammensetzung;
optional wobei die Schritte ii und iii im Wesentlichen gleichzeitig auftreten, **dadurch gekennzeichnet, dass** das Benetzungsmittel ein Alkylethersulfat ist.

19. Vorgang nach Anspruch 18, Verfahren nach Anspruch 16 oder Verfahren nach Anspruch 17, wobei das kohärente Wachstumssubstratprodukt ferner die Merkmale nach einem der Ansprüche 2 bis 15 umfasst.

## Revendications

1. Produit de substrat de croissance cohérent formé de fibres vitreuses artificielles liées à une composition de liant durci et à un agent mouillant, **caractérisé en ce que** l'agent mouillant est un sulfate d'éther alcoylique.

2. Produit de substrat de croissance selon la revendication 1, dans lequel l'agent mouillant est un sulfate d'éther alcoylique de métal alcalin ou un sulfate d'éther alcolylique d'ammonium.

3. Produit de substrat de croissance selon l'une quelconque des revendications précédentes, dans lequel l'agent mouillant est un sulfate d'éther alcoylique de sodium.

4. Produit de substrat de croissance selon l'une quelconque des revendications précédentes, dans lequel l'alkyle a une longueur de chaîne carbonée de 8 à 18 atomes de carbone, de préférence de 12 à 15 atomes de carbone, de préférence de 12 à 14 atomes de carbone.

5. Produit de substrat de croissance selon l'une quelconque des revendications précédentes, dans lequel l'agent mouillant a un degré moyen d'éthoxylation compris entre 1 et 50, de préférence entre 2 et 4.

6. Produit de substrat de croissance selon l'une quelconque des revendications précédentes, dans lequel l'agent mouillant a la formule
RO(CH₂CH₂O)ₙSO₃Na
dans lequel R est un groupe alkyle cyclique ou non cyclique, linéaire ou ramifié en C₈₋₁₈, de préférence dans lequel R est un groupe alkyle cyclique ou non cyclique, linéaire ou ramifié en C₁₂₋₁₅, plus préférablement dans lequel R est un groupe alkyle cyclique ou non cyclique, linéaire ou ramifié en C₁₂₋₁₄ ; et
dans lequel n est compris entre 1 et 50, de préférence dans lequel n est compris entre 2 et 4.

7. Produit de substrat de croissance selon l'une quelconque des revendications précédentes, dans lequel l'agent mouillant est un éthersulfate sodique de lauryle, de préférence dans lequel l'agent mouillant présente un degré d'éthoxylation moyen compris entre 2 et 3.

8. Produit de substrat de croissance selon l'une quelconque des revendications précédentes, dans lequel la quantité d'agent mouillant est comprise entre 0,05 à 3 % en poids sur la base du poids du produit de substrat de croissance, de préférence comprise entre 0,05 à 0,8 % en poids sur la base du poids du produit de substrat de croissance.

9. Produit de substrat de croissance selon l'une quelconque des revendications précédentes, dans lequel le produit de substrat de croissance ne comprend pas d'agent mouillant autre que le sulfate d'éther alcoylique.

10. Produit de substrat de croissance selon l'une quelconque des revendications précédentes, dans lequel le produit de substrat de croissance présente une densité moyenne de 30 à 150 kg/m³, de préférence de 30 à 100 kg/m³, plus préférablement de 40 à 90 kg/m³.

11. Produit de substrat de croissance selon l'une quelconque des revendications précédentes, dans lequel le produit de substrat de croissance comprend au moins 90 % en poids de fibres vitreuses artificielles.

12. Produit de substrat de croissance selon l'une quelconque des revendications précédentes, dans lequel la composition de liant avant le durcissement comprend :
a) un composant de sucre,
b) un produit de réaction d'un composant d'acide polycarboxylique et d'un composant d'alcanolamine,
dans lequel le liant avant durcissement contient au moins 42 % en poids du composant de sucre sur la base du poids total (matière sèche) des composants de liant, de préférence de 46 à 64 % en poids du composant de sucre par rapport au poids total (matière sèche) des composants du liant.

13. Produit de substrat de croissance selon l'une quelconque des revendications précédentes, dans lequel la composition de liant avant le durcissement est un liant phénol-formaldéhyde d'urée comprend.

14. Produit de substrat de croissance selon l'une quelconque des revendications précédentes, dans lequel la quantité de liant ajoutée avant le durcissement est de 1 à 10 % en poids, de préférence de 2 à 6 % en poids.

15. Utilisation d'un substrat de croissance selon l'une quelconque des revendications 1 à 15, comme substrat de croissance pour la culture de plantes ou pour la propagation de graines.

16. Procédé de propagation de graines ou de culture de plantes dans un produit de substrat de croissance cohérent, le procédé comprenant :
la fourniture d'au moins un produit de substrat de croissance formé de fibres vitreuses artificielles liées à une composition de liant durcie et à un agent mouillant ;
le positionnement d'une ou de plusieurs plantes pour la croissance dans le produit de substrat de croissance ; et
l'irrigation du produit de substrat de croissance ;
**caractérisé en ce que** l'agent mouillant est un sulfate d'éther alcoylique.

17. Procédé de propagation de graines dans un produit de substrat de croissance cohérent, le procédé comprenant :
la fourniture d'au moins un produit de substrat de croissance formé de fibres vitreuses artificielles liées à une composition de liant durcie et à un agent mouillant,
le positionnement d'une ou de plusieurs graines dans le produit de substrat de croissance,
l'irrigation du produit de substrat de croissance ; et
le fait de permettre la germination et la croissance de la graine pour former un plant de semis ;
**caractérisé en ce que** l'agent mouillant est un sulfate d'éther alcoylique.

18. Procédé de fabrication d'un produit de substrat de croissance cohérent comprenant les étapes suivantes :
i. la fourniture de fibres vitreuses artificielles ;
ii. la pulvérisation des fibres vitreuses artificielles avec une composition de liant ;
iii. la pulvérisation des fibres vitreuses artificielles avec un agent mouillant ;
iv. la collecte et la consolidation des fibres vitreuses artificielles ; et
v. le durcissement de la composition de liant ;
éventuellement dans lequel les étapes ii et iii se produisent sensiblement simultanément,
**caractérisé en ce que** l'agent mouillant est un sulfate d'éther alcoylique.

19. Procédé selon la revendication 18, un procédé selon les revendications 16 ou 17, dans lequel le produit de substrat de croissance comprend en outre les caractéristiques selon l'une quelconque des revendications 2 à 15.
